**Europäisches Patentamt**

**European Patent Office**

**Office européen des brevets**

(19)

(11) Veröffentlichungsnummer: **0 036 622**
**B1**

(12) **EUROPÄISCHE PATENTSCHRIFT**

(45) Veröffentlichungstag der Patentschrift:
23.01.85

(51) Int. Cl.⁴: **H 04 Q 11/04, H 04 M 11/06,**
**H 04 L 5/22, H 04 J 3/00**

(21) Anmeldenummer: 81101995.9

(22) Anmeldetag: 18.03.81

(54) **Digitales Nachrichtenübermittlungssystem.**

(30) Priorität: 20.03.80 DE 3010702

(43) Veröffentlichungstag der Anmeldung:
30.09.81 Patentblatt 81/39

(45) Bekanntmachung des Hinweises auf die Patenterteilung:
23.01.85 Patentblatt 85/4

(84) Benannte Vertragsstaaten:
AT CH FR GB IT LI NL SE

(56) Entgegenhaltungen:
EP - A - 0 024 617
DE - A - 2 758 109

TELCOM REPORT, 2. Jahrgang Heft 4, August 1979,
Herausgeber und Verlag: SIEMENS AG, Berlin und
München, DE, P. GERKE und P. BOCKER "Das digitale
Telefonie-Netz (DTN) - ein alldigitales Fernsprechnetz
für Sprach-, Daten-, Text- und
Faksimilekommunikation", Seiten 254-261
NACHRICHTENTECHNISCHE ZEITSCHRIFT, 33.
Jahrgang, Heft 2, Februar 1980, Berlin, DE, D. SANDEN
"Weltweites öffentliches Netz für Sprach-, Text-, Bild-
und Datenübertragung", Seiten 74-79

(73) Patentinhaber: **International Standard Electric
Corporation, 320 Park Avenue, New York New
York 10022 (US)**

(72) Erfinder: **Becker, Dietrich, Dr., Obere Burghalde 23,
D-7250 Leonberg (DE)**
Erfinder: **Kaderali, Firoz, Dr., Holunderweg 16,
D-7253 Renningen 2 (DE)**
Erfinder: **Liebscher, Roland, Carl-Peters-Strasse 32,
D-7015 Korntal (DE)**

(74) Vertreter: **Graf, Georg Hugo, Dipl.-Ing. et al, c/o
Standard Elektrik Lorenz AG Patent- und Lizenzwesen
Postfach 300 929 Kurze Strasse 8,
D-7000 Stuttgart 30 (DE)**

## Beschreibung

Die Erfindung betrifft ein digitales Nachrichtenübermittlungssystem gemäß dem Oberbegriff von Patentanspruch 1.

Es ist ein solches System bekannt, das zur Mehrfachausnutzung einer Zweidraht-Teilnehmeranschlußleitung im Fernsprechnetz dient (DE-OS 2 758 109). Bei diesem System werden verschiedene Sprach- und Datenkanäle im Zeitmultiplex über die Anschlußleitung zwischen der Endeinrichtung eines Teilnehmers und der Teilnehmeranschlußschaltung in der zugeordneten Vermittlungsstelle übertragen. Die Übertragung erfolgt mit einer Geschwindigkeit (auch: Bitstrom oder Bitrate) von 192 kbit/s.

Sollen mit dem bekannten System größere Entfernungen zwischen der Vermittlungsstelle und dem Teilnehmer überbrückt werden, so ist es erforderlich, entweder besondere Anschlußleitungen zu verlegen oder Zwischenregeneratoren einzusetzen, um die erforderliche Übertragungsqualität gewährleisten zu können. Das Verlegen neuer Leitungen oder der Einsatz von Zwischenregeneratoren erfordert aber hohe Investitionsmittel.

Aus »Telcom Report«, 2. Jahrgang, Heft 4, August 1979, S. 258, mittlere Spalte ist auch bereits bekannt, Sprache und Signalisierung nebeneinander auf Kanälen mit unterschiedlichen Bandbreiten zu übermitteln.

Der Erfindung liegt die Aufgabe zugrunde, ein digitales Nachrichtenübermittlungssystem zu schaffen, das eine qualitativ einwandfreie simultane Übertragung von Sprache und Daten über herkömmliche Fernsprech-Anschlußleitung ermöglicht.

Diese Aufgabe wird erfindungsgemäß durch das im Patentanspruch 1 gekennzeichnete Nachrichtenübermittlungssystem gelöst.

Vorteilhafte Weiterbildungen der Erfindung sind in den Unteransprüchen gekennzeichnet.

Ein Vorteil der Erfindung besteht darin, daß über einen Zusatzkanal auf derselben Leitung gleichzeitig Synchronisier- und Signalisierzeichen sowie Daten mit kleinerer Bitrate übertragen werden können. Außerdem ist die Bitfehlerrate, d. h. die Wahrscheinlichkeit, daß ein Bit bei der Übertragung verfälscht wird, bei dem erfindungsgemäßen System sehr gering. Der Hauptkanal kann wahlweise zum Übertragen von Sprache oder von Daten verwendet werden, der Zusatzkanal kann gleichzeitig und unabhängig vom Hauptkanal zur Übertragung von Daten verwendet werden.

Ein Ausführungsbeispiel der Erfindung wird im folgenden anhand der Zeichnung erläutert. Es zeigt

Fig. 1 die in dem erfindungsgemäßen Nachrichtenübermittlungssystem gebildeten Zeitvielfachkanäle in schematischer Darstellung,

Fig. 2 die Zuordnung der Nummern der über die Anschlußleitung übertragenen Bits zu den einzelnen aus Fig. 1 ersichtlichen Kanälen,

Fig. 3 den Aufbau des bei der erfindungsgemäßen Nachrichtenübermittlung verwendeten Zeitvielfach-Rahmens,

Fig. 4 die teilnehmerseitige Endeinrichtung des erfindungsgemäßen Nachrichtenübermittlungssystems, als Blockdiagramm dargestellt,

Fig. 5 die Endeinrichtung nach Fig. 4 mit Darstellung der einzelnen Daten- und Steuerleitung,

Fig. 6 die vermittlungsseitige (Teilnehmer) Anschlußschaltung, als Blockdiagramm dargestellt,

Fig. 7 die Anschlußschaltung nach Fig. 6 mit Darstellung der einzelnen Daten- und Steuerleitungen,

Fig. 8 an die Endeinrichtung anschließbare Zusatzeinrichtungen für Datenübertragung über den Hauptkanal und für Datenübertragung über den Zusatzkanal, in schematischer Darstellung,

Fig. 9 die zentrale Einheit und die Umwandlungseinheit der Endeinrichtung nach Fig. 4 und Fig. 5, und

Fig. 10 die zentrale Einheit der Anschlußschaltung nach Fig. 6 und Fig. 7.

Die teilnehmerseitige Endeinrichtung 1 eines erfindungsgemäßen digitalen Nachrichtenübermittlungssystem enthält einen Fernsprechapparat 2, in dem die analogen Sprachsignale nach einem geeigneten Verfahren — z. B. durch Pulscodemodulatin (PCM) — digitalisiert und die digitalen Signale in einen Hauptkanal HKA eingeblendet werden. Die zum Aufbau und zum Betreiben einer Nachrichtenverbindung erforderlichen digitalen Signalisier- und Synchronisierungszeichen werden in einen Zusatzkanal für Signalisierung und Synchronisierung ZKS eingeblendet. Die Endeinrichtung kann auch mit einem Datenendgerät 3 beliebiger Art versehen sein, das, wie durch einen Schalter 5 angedeutet, wahlweise an das Nachrichtenübermittlungssystem angeschlossen werden kann, und dessen digitale Nachrichtensignale dann an Stelle der Sprachsignale über den Hauptkanal HKA übertragen werden, während die Signalisier- und Synchronisierzeichen ebenfalls in den Zusatzkanal ZKS eingegeben oder aus ihm ausgelesen werden.

Die Endeinrichtung kann außerdem ein weiteres Datenendgerät 7 aufweisen, das digitale Datensignale mit geringer Bitrate liefert. Der Bitstrom wird in einen Zusatzkanal für Daten ZKD eingeblendet, die Signalisierbits in den Zusatzkanal für Signalisierung eingegeben. Während die Übertragung von Sprache oder von Daten in dem Hauptkanal HKA nur jeweils für sich erfolgen kann, kann über den Zusatzkanal gleichzeitig und unabhängig von der Verbindung über den Hauptkanal eine weitere Datenübertragung durchgeführt werden.

In dem dargestellten Ausführungsbeispiel betragen der Bruttobitstrom oder Bruttobitrate des Hauptkanals HKA — wie in der Zeichnung angedeutet — 64 kbit/s, der des Zusatzkanals für Signalisierung und Synchronisierung ZKS 8 kbit/s und der des Zusatzkanals für Daten ZKD ebenfalls 8 kbit/s.

Die verschiedenen Bitströme werden in einer Zeitvielfachschaltung 9 zeitlich verschachtelt und gelangen als 80-kbit/s-Strom über eine Teilnehmer-Anschlußleitung 11 zu einer vermittlungsseitigen Zeitvielfachschaltung 13, in der die Bitströme des Hauptkanals HKA, des Zusatzkanals für Signalisierung und Synchronisierung ZKS und des Zusatzkanals für Daten ZKS wieder getrennt werden. Bei Datenübertragung in umgekehrter Richtung, d. h. von der Vermittlungsstelle zu der Endeinrichtung, arbeitet die Zeitvielfachschaltung 13 als Multiplexer, während die Zeitvielfachschaltung 9 als Demultiplexer wirkt, d. h. die Bitströme trennt.

Über eine Teilnehmer-Anschlußschaltung 15 ist die Anschlußleitung 11 und damit die einzelne Endeinrichtung 1 an die zugeordnete Fernsprechvermittlungsstelle angeschlossen (in der Zeichnung nicht dargestellt) und über diese mit dem weiteren Fernsprechnetz verbunden. Von der Endeinrichtung 1 gelangen die Nachrichtensignale und die Steuerzeichen über den Hauptkanal HKA bzw. über den Zusatzkanal für Signalisierung und Synchronisierung ZKS zu der Anschlußschaltung 15. Diese weist eine Grundausführung 16 auf und kann außerdem mit einer Zusatzdiensteinrichtung 17 versehen sein, die den Anschluß an ein Datennetz herstellt, z. B. an das Integrierte Datennetz IDN oder das Datenpaketvermittlungsnetz DPVN. Der Datenaustausch zwischen dem Endgerät 7 und der Zusatzdiensteinrichtung 17 erfolgt über den Zusatzkanal für Daten ZKD, wobei die Signalisierung und Synchronisierung ebenfalls über den Zusatzkanal ZKS erfolgt.

Über die Zusatzdiensteinrichtung wird auch die Verbindung zur örtlichen Bildschirmtextzentrale BT-Z hergestellt. Dabei kann eine Verbindung zur Bildschirmtextzentrale über den Zusatzkanal ZKD abgewickelt werden, während über den Hauptkanal HKA ein Ferngespräch geführt wird. Im Gegensatz zum herkömmlichen analogen Ortsnetz wird durch eine Bildschirmtext-Verbindung die Fernsprechleitung nicht blokkiert. Außerdem ist genügende Kapazität zur Übertragung von Signalisierzeichen auch für weitere in Zukunft zu realisierende Dienste und Leistungsmerkmale vorhanden.

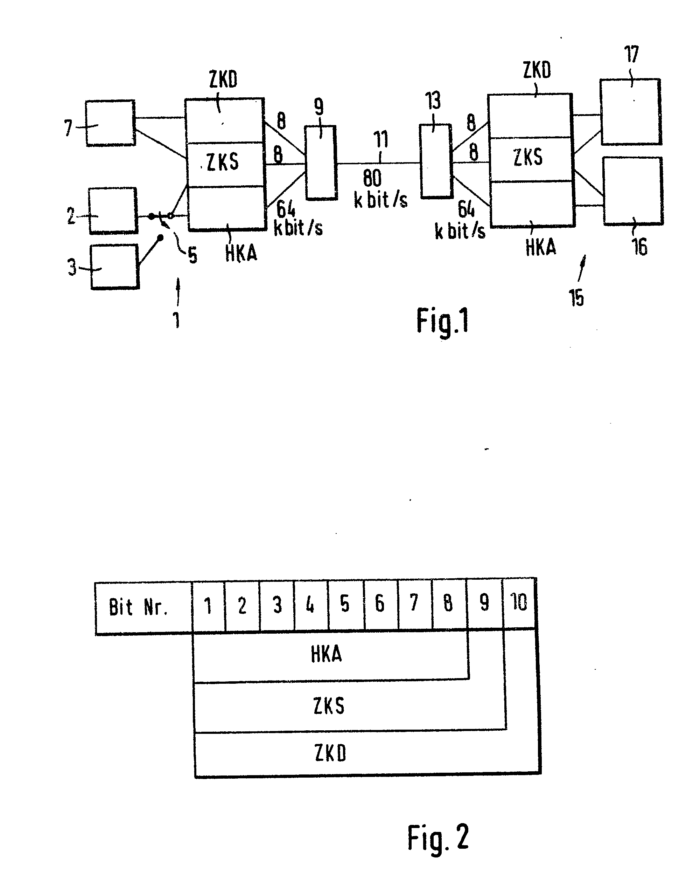

Fig. 2 zeigt eine vorteilhafte Wortstruktur der über die Anschlußleitung 11 übertragenen digitalen Signale, d. h. die Zuordnung der einzelnen Bit-Nummern zu den verschiedenen Kanälen. Die Bits Nummer 1 bis 8 eines jeden Wortes sind dem Hauptkanal HKA, das Bit Nummer 9 dem Zusatzkanal ZKS für Signalisierung und Synchronisierung und das Bit Nummer 10 dem Zusatzkanal ZKD für Daten zugeordnet. Die Wortdauer beträgt 125 µs, die Wortfolgefrequenz 8 kHz.

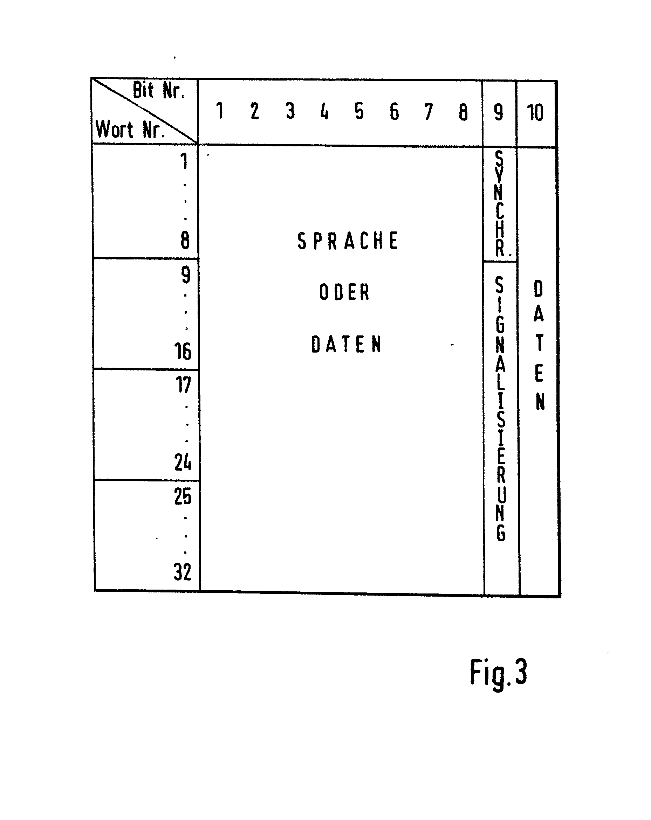

Während über die Bitnummer innerhalb eines Wortes die Kanäle identifiziert werden, wird mit Hilfe der aus Fig. 3 ersichtlichen Rahmenstruktur die Bitfolge im Übertragungskanal in Wörter aufgelöst. Ein Rahmen enthält 32 Wörter mit je 10 Bit und somit beträgt die Rahmenlänge 320 Bit.

Die Rahmendauer beträgt 4 ms und daraus ergibt sich bei einer Wortfolgefrequenz von 8 kHz eine Rahmenfolgefrequenz von 250 Hz.

Wie ebenfalls aus Fig. 3 ersichtlich ist, ist das Bit Nummer 9 der Wörter Nummer 1 bis Nummer 8 eines Rahmens für die Rahmensynchronisierung und das Bit Nummer 9 der Wörter Nummer 9 bis 32 eines Rahmens für die Signalisierung vorgesehen.

Aus den vorstehend genannten Bits gebildete Signalisierungszeichen dienen zur Netzsteuerung, d. h. zum Signalaustausch mit den Vermittlungseinrichtungen, und zum Informationsaustausch mit Sonderdiensteinrichtungen und Zusatzdiensten.

Anders als im herkömmlichen analogen Ortsnetz, in dem üblicherweise Zustände signalisiert werden, werden im erfindungsgemäßen Nachrichtenübermittlungssystem Ereignisse, d. h. Zustandsänderungen (sog. »events«) signalisiert. Die Signalisierungszeichen werden im Zusatzkanal ZKS, d. h. außerhalb des Sprachbandes übertragen. Eine Ausnahme bilden lediglich die Hörtöne. Ein Signalisierwort ist in folgende drei Felder zu je 8 Bits (Oktette) unterteilt: ein Kopffeld, ein Zeichenfeld und ein Sicherungsfeld.

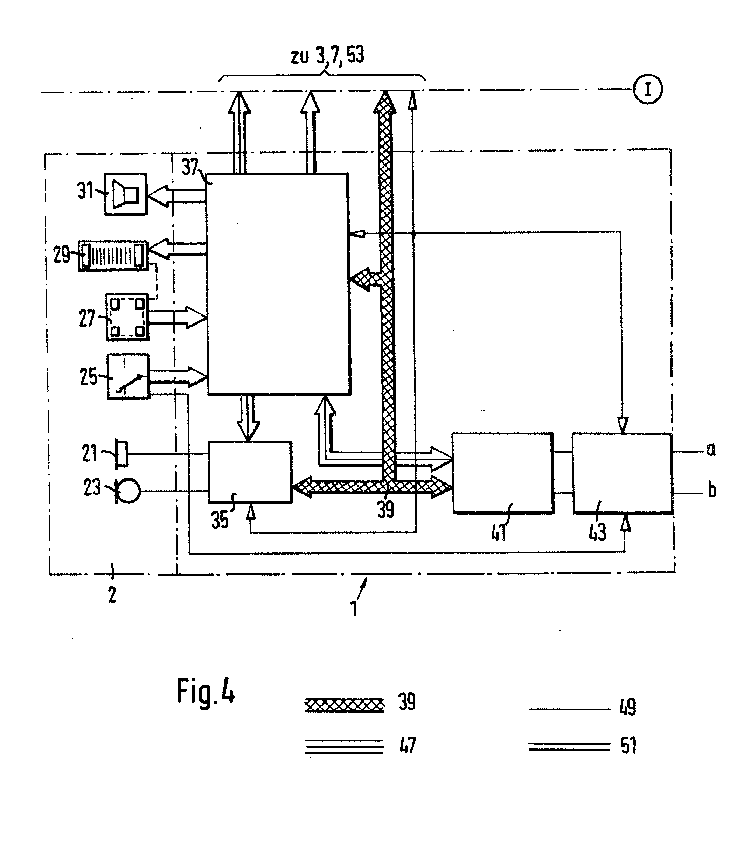

Die teilnehmerseitige Endeinrichtung 1 (Fig. 4) schließt den Fernsprechapparat 2 mit folgenden Grundfunktionen ein: eine Sprechschaltung mit einer Hörkapsel 21 und einer Mikrophon- oder Sprechkapsel 23, einen Gabelumschalter 25, eine Wähleinrichtung 27 mit 16 Tasten, eine Nummern-Anzeige 29 mit 16 Stellen und einen Tonrufgenerator 31.

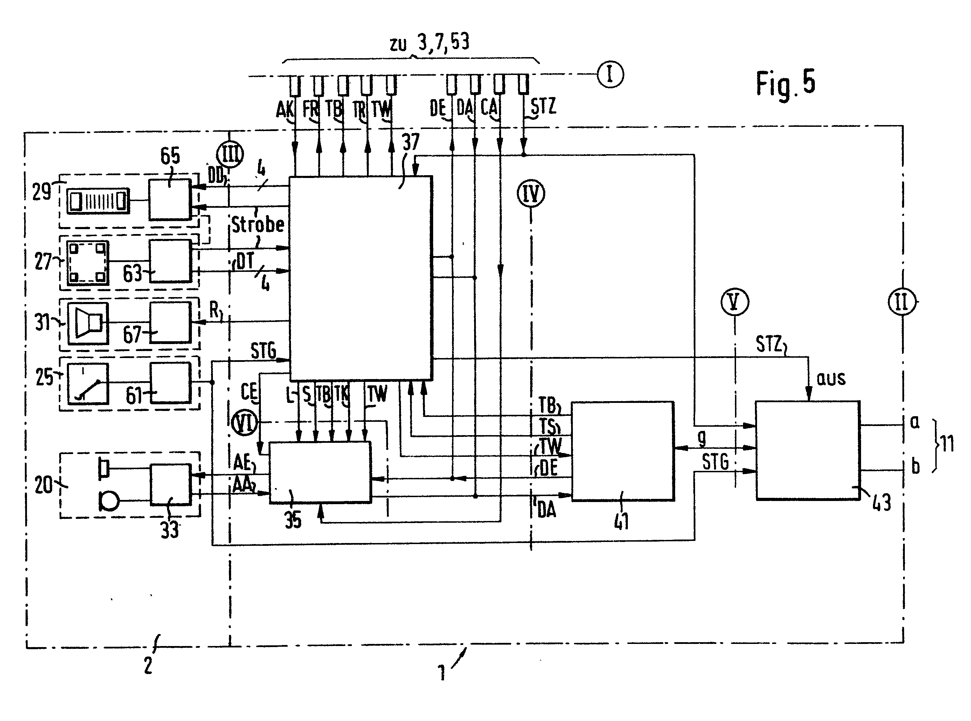

Die Sprechschaltung 20 (vgl. Fig. 5) schließt einen in der Zeichnung nicht dargestellten Handapparat, der mit der dynamischen Hörkapsel 21 und der dynamischen Sprechkapsel 23 bestückt ist, sowie eine Anpassungsschaltung 33 ein, die die Schnittstelle zu einer Umwandlungseinheit 35 darstellt. Die Anpassungsschaltung 33 bewirkt, daß die von der Fernsprechverwaltung geforderten übertragungstechnischen Werte wie Bezugsdämpfung, Rückhördämpfung, Frequenzgang usw. sowie die Übergabepegel an der Schnittstelle eingehalten werden.

Der Gabelumschalter 25 übernimmt zum einen die Funktion der Teilnehmer-Zustandsmeldung durch Ein- und Ausschalten der Stromversorgung und — als Folge davon — Einleiten der Synchronisierungsphase in der digitalen Teilnehmerschaltung.

Die Umwandlungseinheit 35 enthält einen Codec (Codier- und Decodierschaltung), einen Filter und einen Zwischenspeicher. Die von dem Mikrophon 23 aufgenommene Sprache wird durch das Filter mit Tiefpassverhalten bandbegrenzt, digitalisiert und gemäß einer CCITT-Empfehlung für PCM in 8-Bit-Wörter codiert. Die codierten Wörter werden zeitrichtig von einer teilnehmerseitigen zentralen Einheit 37 abgerufen und in die abgehende Leitung eines seriellen Datenbusses 39 eingeblendet, der im folgenden auch als 10-Bit-Bus bezeichnet wird.

In Empfangsrichtung werden die 8-Bit-Wörter mit Hilfe eines Steuertaktes von der zentralen Einheit 37 aus dem 10-Bit-Kanal ausgeblendet und in den Zwischenspeicher der Umwandlungseinheit 35 eingeschrieben. Dort stehen die 8-Bit-PCM-Wörter dann für eine kontinuierliche Digital/Analog (D/A)-Wandlung zur Verfügung. Anschließend wird das analoge Signal sprachbandbegrenzt und auf die Hörkapsel 21 gegeben. Die Umwandlungseinheit 35 wird im Ruhe- und im Rufzustand von der Stromversorgung abgeschaltet.

Außer den obengenannten Funktionen trennt der Gabelumschalter 25 ·beim Abheben des Handapparats eine Rufempfangschaltung in der zentralen Einheit 37 ab und schaltet gleichzeitig die Sprechschaltung 20 und die den Codec enthaltende Umwandlungseinheit 35 ein bzw. beim Auflegen des Handapparats ab.

Die Wähleinrichtung 27 weist außer den üblichen Wähltasten 1 bis 0 zum Eintasten der Rufnummern, das eine direkte Eingabe der Wahlinformation in die zentrale Einheit 37 bewirkt, eine Taste für die Gebührenanzeige, eine Taste für die Zeitanzeige und vier weitere Tasten für beliebig vorzusehende Sonderfunktionen auf.

Die Nummernanzeige 29 weist ein 16ziffriges Display mit entsprechender Ansteuerschaltung auf. Die Anzeige wird mittels codierter Signalisierwörter angesteuert, deren Auswertung in der zentralen Einheit 37 erfolgt. Angezeigt werden können z. B. die Uhrzeit, die Gebühren, die von dem Teilnehmer gewählte Rufnummer oder auch die Rufnummer des rufenden Teilnehmers.

Die teilnehmerseitige Endeinrichtung 1 enthält auch eine Richtungstrennungseinheit 41 und eine mit einer Belegungserkennungsschaltung versehene Stromversorgungseinheit 43. Im betrieblosen Zustand sind die Schaltungsteile der Endeinrichtung stromlos, d. h. die Stromversorgung ist abgeschaltet. Das Aktivieren der Stromversorgung von dem betriebslosen in den Betriebszustand wird von der Belegungserkennungsschaltung (einem sog. Bitstromdetektor) durchgeführt. Diese Schaltung, die im Ruhezustand nur einen sehr geringen Leistungsbedarf aufweist, schaltet im Belegungsfall die Stromversorgung ein und zwar entweder:

— ausgelöst durch den von der Vermittlungsstelle gesendeten Bitstrom, oder
— ausgelöst durch Betätigen des Gabelumschalters beim Abheben des Handapparates, oder
— ausgelöst durch Einschalten einer an die digitalen Endeinrichtung angeschlossenen Zusatzeinrichtung.

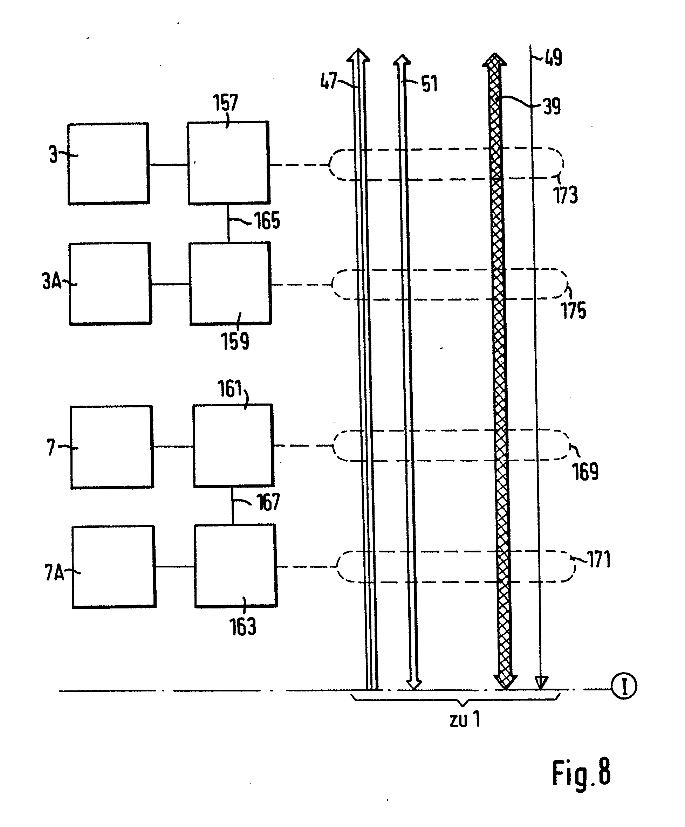

Die zentrale Einheit 37 in der Endeinrichtung 1 hat folgende Aufgabe: das Synchronisieren der Teilnehmer-Endeinrichtung 1, die Aufnahme und Abgabe von Signalisierungszeichen, das Steuern der Umwandlungseinheit 35, insbesondere deren Codec, und das Steuern der Zusatzeinrichtungen 3, 7, zu der in Fig. 4 nur die Schnittstelle dargestellt ist (vgl. auch Fig. 8).

Einzelheiten der Belegungserkennung und der Stromversorgungseinheit 43 können der DE-OS 2 940 617 entnommen werden.

Die zentrale Einheit 37 und die anderen Schaltungsteile der Teilnehmer-Endeinrichtung, einschließlich des Fernsprechapparats 2, sind untereinander durch den Datenbus 39 sowie durch Steuer-Leitungen 47, Ein/Aus-Leitungen 49 und Prioritäts-Leitungen 51, die durch unterschiedliche zeichnerische Darstellungen kenntlich gemacht sind (vgl. Fig. 4 unten), verbunden.

Der Tonrufgenerator 31 wird mit Gleichstrom betrieben. Er wird nach Aktivieren der ferngesteuerten Stromversorgungs- und Belegungserkennungseinheit 43 mittels eines im Signalisierungskanal ZKS übertragenen und in der zentralen Einheit 37 decodierten Ruf-Steuerzeichens ein- und ausgeschaltet.

Die Endeinrichtung 1 ist für einen modularen Ausbau vorbereitet. Dies wird unter anderem dadurch erreicht, daß der Datenkanal 39 als serieller 10-Bit-Bus ausgebildet ist. An einer durch den Datenbus und durch Steuer- und Signalleitungen gebildeten Schnittstelle I kann die Teilnehmereinrichtung — wie bereits erwähnt — durch eine Zusatzeinrichtung 3, 7 und außerdem durch eine Ergänzungs- oder Komfortausstattung 53 mit zusätzlichen Merkmalen erweitert werden. Als Beispiele für die Komfortausstattung seien ein erweitertes alphanumerisches Tastenfeld, eine alphanumerische Anzeige und darüber hinaus ein Sondertastenfeld genannt (nicht dargestellt).

Aus Fig. 5, in der die Schaltungsbestandteile der Endeinrichtung die gleichen Bezugszeichen aufweisen wie in Fig. 4, sind die einzelnen Leitungen an den verschiedenen Schnittstellen ersichtlich. Im Gegensatz zu der von der Vermittlungsstelle aus ferngespeisten Stromversorgung der Grundausstattung werden die Zusatzeinrichtungen 3, 7 und die Komfortausstattung 53 örtlich aus dem 220-V-Netz gespeist.

An der Schnittstelle zu den gegebenenfalls vorhandenen Zusatzeinrichtungen 3, 7 und Komfortausstattung 53 sind folgende Leitungen vorgesehen: aktiv (für Signalisierung von der Zusatzeinrichtung) AK, Freigabe (für Signalisierung von der Zusatzeinrichtung) FR, Bittakt TB, Rahmentakt TR, Worttakt TW, kommende Daten (im Binärcode) DE, gehende Daten (im Binärcode) DA, Abschalten des Codec CA und Stromversorgung ein/aus STZ.

An der Schnittstelle II sind im Falle eines symmetrischen Zweidraht-Anschlußes, wie er in Fig. 5 dargestellt ist, die a- und b-Adern der Teilnehmer-Anschlußleitung 11 vorhanden. Bei symmetrischem Vierdraht-Anschluß, wie er etwa bei großer Entfernung zwischen dem Teilnehmer und der Vermittlungsstelle verwendet werden kann, wird die Schnittstelle durch die c-, d-, e- und f-Adern der Anschlußleitung 11 gebildet.

Die Schnittstelle III zwischen dem Fernsprechapparat und dem Betriebsteil der Endeinrichtung 1 weist folgende Leitungen auf: Analog-Eingang AE, Analog-Ausgang AA, Stromversorgung Ein/Ausschalten (vom Gabelumschalter aus) STG, Start/Stop für den Tonruf R, eine Vierfachleitung DT für die Dateneingabe von der Tastatur sowie eine Steuerleitung »Strobe« zu der Tastatur 27, eine Vierfach-Datenleitung DD sowie eine Steuerleitung »Strobe« zu der Nummernanzeige 29.

Die Schnittstelle IV weist folgende Leitungen auf: Bittakt TB, Systemtakt TS, Worttakt TW, kommende Daten im Binärcode DE und gehende Daten im Binärcode DA.

Die Schnittstelle V enthält folgende Leitungen: unsymmetrische Schnittstellen-Verbindungsleitung g, auf der die Daten im Leitungscode vorliegen; Stromversorgung ein/aus von der Zusatzeinrichtung aus STZ und von der zentralen Einheit 37 aus STZ, Stromversorgung ein/aus vom Gabelumschalter aus STG. Bei Vierdraht-Anschluß enhält diese Schnittstelle anstelle der Leitung g eine Leitung i für kommende Daten, unsymmetrisch, im Leitungscode und eine Leitung j für gehende Daten, unsymmetrisch im Leitungscode.

Die Schnittstelle VI weist folgende Leitungen auf: Codec ein CE, Lesen (PCM-Wort) L, Schreiben (PCM-Wort) S, Bittakt TB, Konvertertakt (z. B. 128 kHz) TK und Worttakt TW.

Im folgenden werden Einzelheiten der Funktion der Endeinrichtung 1 nach den Fig. 4 und 5 erläutert. Der für die Grundausrüstung der Endeinrichtung erforderliche Betriebsstrom wird über einen in der Stromversorgungseinheit 43 enthaltenen Auskoppelübertrager zwischen der a- und der b-Ader der Teilnehmeranschlußleitung ausgekoppelt, wobei durch einen Parallelregler eine konstante Betriebsspannung eingestellt wird.

Die Stromversorgungseinheit 43 enthält, wie bereits erwähnt, einen Belegungsdetektor, durch welchen ein Bitstrom auf der Anschlußleitung 11 erkannt wird. Es handelt sich um einen Empfänger mit hochohmigem Eingang und Ansprechschwelle. Den erforderlichen geringen Ruhestrom bezieht der Belegungsdetektor aus der in diesem Zustand noch unbelasteten Auskoppelungseinrichtung — hierbei ist der Parallelregler nicht wirksam.

Im Ruhezustand fließt kein Strom über die Anschlußleitung 11, ausgenommen der geringe Ruhegleichstrom für den Belegungsdetektor. Die Stromversorgung für alle übrigen Einheiten ist abgeschaltet. Sie kann eingeschaltet werden vom Teilnehmer, von den Zusatzeinrichtungen 3, 7 oder vom Bitstromdetektor (Schnittstellenleitungen STG und STZ).

Mit dem Auskoppelübertrager der Stromversorgungseinheit 43 wird die erforderliche Potentialtrennung und Pegelanpassung zwischen der Anschlußleitung 11 und der Teilnehmer-Endeinrichtung durchgeführt. Innerhalb der Endeinrichtung 1 ist der Übertragungsweg unsymmetrisch geführt (Schnittstellenleitung g in Fig. 5).

Die Endeinrichtung 1 ist durch eine Schutzeinrichtung in der Stromversorgungseinheit 43 gegen auf der Anschlußleitung 11 möglicherweise auftretende Überspannungen geschützt.

Die Stromversorgungseinheit für einen Vierdraht-Anschluß unterscheidet sich von der vorstehend beschriebenen Stromversorgungseinheit 43 dadurch, daß bei ihr der Strom über je einen Auskoppelübertrager aus den c-, d- und den e-, f-Adern ausgekoppelt wird und daß der Bitstromdetektor den Bitstrom auf der c- und d-Ader überwacht.

Die Richtungstrennungseinheit 41 kann entweder für einen Zweidraht-Anschluß ausgelegt sein und eine Einrichtung enthalten, welche nach einem Zeit- oder einem Frequenzgetrenntlageverfahren oder nach einem Gleichlageverfahren arbeitet, oder sie kann für einen Vierdraht-Anschluß vorgesehen sein, bei dem beide Übertragungsrichtungen in Raumgetrenntlage geführt sind.

In der Richtungstrennungseinheit 41 wird auch die Leitungscodierung durchgeführt. Der für die Leitungscodierung erforderliche kommende Bittakt wird durch Bitsynchronisierung gewonnen und steht auch für die zentrale Einheit 37 zur Verfügung. Den gehenden Bittakt liefert dagegen die zentrale Einheit 37.

Für die Richtungstrennungsverfahren bei einem Zweidraht-Anschluß gilt folgendes. Bezüglich der Schnittstelle V (Fig. 5) ist grundsätzlich zwischen drei Arten von Richtungstrennungsverfahren zu unterscheiden: dem Zeitgetrenntlageverfahren, dem Gleichlage- und dem Frequenzgetrenntlageverfahren. Bei der ersten Art treten die Signale büschelweise (in sog. »bursts«) auf, bei den anderen Arten in kontinuierlicher Form.

Die Richtungstrennungseinheit 41 ist über die Schnittstellenleitung g und den in der Stromversorgungseinheit 43 enthaltenen Übertrager mit der Anschlußleitung 11 verbunden. Sie enthält neben der eigentlichen Richtungstrennungseinheit noch Leitungscodierer und -Decodierer sowie Leitungstreiber und -Empfänger mit den erforderlichen Impulsformer- oder Entzerrungseinrichtungen.

Der in der Endeinrichtung 1 erforderliche Bittakt wird in der Richtungstrennungseinheit 41 aus dem aus der Anschlußleitung ankommenden Bitstrom abgeleitet und wird über die Schnittstellenleitung TB der zentralen Einheit 37 zur Verfügung gestellt.

Die aus der Anschlußleitung 11 ausgekoppelten kommenden Daten werden in der Richtungstrennungseinheit 41 so aufbereitet, daß sie in binärer Form und synchron und in Phase mit dem kommenden Bittakt TB an der Schnittstellenleitung DE zur Verfügung stehen. Der Systemtakt gelangt ebenfalls von der Richtungstrennungseinheit 41 zu der zentralen Einheit 37. Der Worttakt in gehender Richtung wird über die Leitung TW von der zentralen Einheit 37 zur Verfügung gestellt, und zwar in kontinuierlicher Form.

Das Einblenden von gehenden Daten in den 10-Bit-Kanal wird in der Endeinrichtung 1 oder in der Zusatzeinrichtung 3, 7 derart von der zentralen Einheit gesteuert, daß sie synchron und in Phase mit dem Bittakt an der Schnittstellenleitung DA zur Verfügung stehen.

Im Falle der Nachrichtenübertragung über Vierdraht-Anschluß arbeitet die Richtungstrennungseinheit 41 im Raumgetrenntlageverfahren.

Sie unterscheidet sich dabei von der Richtungstrennungseinheit für den Zweidraht-Anschluß an der Schnittstelle dadurch, daß hier stets ein kontinuierlicher Datenstrom auftritt.

Die in der Umwandlungseinheit 35 enthaltenen Codec und Filter, welche die Analog/Digital- und Digital/Analog-Wandlung der Sprachsignale durchführen, sind auf der analogen Seite an die Mikrophon- und Hörkapsel der Sprechschaltung 20 und auf der digitalen Seite an den 10-Bit-Kanal angeschlossen. Die zentrale Einheit 37 stellt die für den Betrieb des Codes und zum Einlesen und Auslesen der 8-Bit-PCM-Worte in den bzw. aus dem 10-Bit-Daten-Bus 39 (Fig. 4) erforderlichen Takte zur Verfügung: den Bittakt TB, den Konverterakt TK und den Worttakt TW.

Die Umwandlungseinheit 35 weist auch Steuereingänge »Konverter ein« CE und »Konverter aus« CA auf. Das Ein- und Ausschalten der Umwandlungseinheit 35 ist erforderlich um bei aufgelegtem Handapparat den Stromverbrauch zu reduzieren, so daß ein ausreichender Rufstrom zur Verfügung steht, und auch im Falle der Datenübertragung über den Hauptkanal.

Außerdem werden für den Codec der Umwandlungseinheit 35 Schreib- und Leseimpulse erzeugt. Diese beiden Impulse sorgen für das zeitrichtige Einschreiben bzw. Auslesen des 8-Bit-PCM-Wortes aus dem bzw. in den 10-Bit-Datenstrom. Die Schnittstellenleitung L ist während der ersten 8 Bittaktperioden jedes an der Schnittstellenleitung DE anstehenden 10-Bit-Wortes aktiv geschaltet.

Bei den Daten in gehender Richtung werden die 8-Bit-PCM-Worte in den ersten 8 Bittaktperioden jedes Wortes in den gehenden 10-Bit-Datenbus, d. h. die Schnittstelleneinheiten DA, eingeblendet. Der von der zentralen Einheit 37 kommende Schreibbefehl markiert die Lage der einzublendenden 8-Bit-PCM-Worte in dem gehenden PCM-Kanal. Die Schnittstellenleitung S ist während der ersten 8 Bit-Taktperioden jedes 10-Bit-Wortes auf der Schnittstellenleitung DA aktiv geschaltet.

An der Schnittstellenleitung AE, welche zu der Anpassungsschaltung oder Schnittstelleneinrichtung 33 der Sprechschaltung 20 führt, steht das kommende Signal in analoger Form mit definiertem Pegel zur Verfügung. An der Schnittstellenleitung AA, welche von der Schnittstelleneinrichtung 33 kommt, steht das gehende Signal in analoger Form mit definiertem Pegel zur Verfügung.

Die D/A- und A/D-Wandlung in der Umwandlungseinheit 35 erfolgt nach dem A-Gesetz gemäß CCITT-Empfehlung G 711. Die übertragungstechnischen Eigenschaften entsprechen der CCITT-Empfehlung G 712.

Die zentrale Einheit 37 enthält eine Synchronisierungseinrichtung zum Gewinnen des Rahmentaktes aus dem von der Richtungstrennungseinheit 41 kommenden Bittakt. Sie enthält außerdem eine Steuerung zur Multiplexbildung für das Einblenden und Auslesen von Information in bzw. aus dem Hauptkanal HKA und den Zusatzkanälen ZKS, ZKD in den bzw. aus dem 10-Bit-Datenbus 39. Sie liefert die erforderlichen Schreib- und Lesetakte an den Codec und besitzt Einrichtungen zur Anpassung der Signalisierung zwischen den Schaltungsteilen der Grundausstattung — Gabelumschalter 25, Wähleinrichtung 27, Nummernanzeige 29 und Tonrufgenerator 31 — und dem Zusatzkanal ZKS, und zwar einschließlich der Signalaufbereitung. Die genannten Schaltungsteile 25, 27, 29, 31 sind über jeweils eine Schnittstelleneinrichtung oder Anpassungsschaltung 61, 63, 65 bzw. 67 an die zentrale Einheit 37 angeschlossen.

Im Falle, daß die Endeinrichtung 1 mit einer Zusatzeinrichtung versehen ist, werden der Bittakt, der Worttakt und der Rahmentakt von der zentralen Einheit 37 über die entsprechenden Leitungen TB, TW und TR der Schnittstelle I der Zusatzeinrichtung 3, 7 zur Verfügung gestellt. Zwei weitere Signale über die Schnittstellenleitungen FR und AK regeln die Priorität zwischen der Fernsprecheinrichtung 2 und der Zusatzeinrichtung 3, 7. In gehender Richtung werden Signalisierungszeichen der Fernsprecheinrichtung gegenüber denen der Zusatzeinrichtung grundsätzlich vorrangig übertragen, eine für die Zusatzeinrichtung begonnene Übertragung wird jedoch in jedem Fall zu Ende geführt. Die zentrale Einheit 37 steuert alle zeitliche Abläufe zwischen dem Datenbus 39 (Schnittstelle IV), der Umwandlungseinheit 35 (Schnittstelle VI), den Signalisierungseinrichtungen des Fernsprechapparats 2 (Schnittstelle III) und der Zusatzeinrichtung 3 oder 7 (Schnittstelle I).

In der zentralen Einheit 37 wird mit Hilfe des kommenden Bittaktes TB aus jedem neunten Bit der kommenden Daten DE ein Synchronisierwort von 8 Bit Länge selektiert. In gehender Richtung wird das Synchronisierungswort im neunten Bit der ersten acht Worttaktperioden jeder Rahmentaktperiode in den gehenden Datenstrom DA eingeblendet (vgl. auch Fig. 3).

Während der Belegungsphase einer Verbindung wird die Synchronisierung dadurch unterstützt, daß in den übrigen Bits des gehenden Datenstromes, welche nicht für das Synchronisierwort in Anspruch genommen sind, ein die Synchronisierung unterstützendes Bitmuster eingeblendet wird. Die Einblendung wird unterbrochen, sobald die Belegungsaufforderung erkannt worden ist. Während der Synchronisierzeit ist auch der ankommende Datenstrom mit einem die Synchronisierung unterstützenden Muster versehen. Dieses Muster ist dazu bestimmt, die Synchronisierung zu beschleunigen.

Die Synchronisierung gilt als gesichert, wenn das Synchronisierwort zweimal hintereinander erkannt wurde. Wird das Synchronisierwort dagegen zweimal hintereinander nicht erkannt, so wird die Synchronisierung von neuem eingeleitet. Nach erfolgter Synchronisierung wird von der zentralen Einheit 37 neben dem Bittakt TB auch der Rahmentakt TR und der daraus abgeleitete Worttakt TW zur Verfügung gestellt. Dabei wird der Bittakt in kontinuierlicher Form geliefert.

Bittakt-, Worttakt- und Rahmentaktperiode beginnen gleichzeitig. Eine Rahmentaktperiode ist 32 Worttaktperioden und 320 Bittaktperioden lang.

Nach erfolgter Synchronisierungssicherung wird laufend geprüft, ob im Kopffeld einer Rahmenperiode des Codezeichen für Fernsprechen im kommenden Datenstrom DE enthalten ist. Wird zusammen mit dem Kopffeld für Fernsprechen im Zeichenfeld das Belegungsaufforderungszeichen erkannt, so wird zuerst die Einblendung des die Synchronisierung unterstützenden Bitmusters in den gehenden Datenstrom unterbrochen und dann der Zustand des Gabelumschalters laufend überprüft. So wird vom Ruhezustand ausgehend jeder Wechsel des Gabelumschalters von »aufgelegt« nach »abgehoben« in Form des Belegtzeichens und jeder Wechsel des Gabelumschalters von »abgehoben« nach »aufgelegt« in Form des Auslösezeichens im Zeichenfeld einer Rahmentaktperiode in den gehenden Datenstrom eingeblendet. Hierbei enthält das Kopffeld den Code für Fernsprechen. Das siebte Bit des Kopffeldes dient zur Zeichenfelderkennung: »0« für Steuerzeichen, »1« für ein Symbol aus einem international genormten Alphabet (I. A. Nr. 5).

Zur Steuerung des Codes der Umwandlungseinheit 35 wird ein Leseimpuls L, durch welchen dem Codec mitgeteilt wird, wann jeweils ein 8-Bit-PCM-Wort im Datenbus 39 zur Verfügung steht, oder ein Schreibimpuls S erzeugt, durch welchen dem Codec mitgeteilt wird, wann jeweils ein 8-Bit-Wort in den Datenbus 39 eingeblendet werden soll.

Der Rufempfang erfolgt indem dann, wenn zusammen mit dem Kopffeld für Fernsprechen im Zeichenfeld einer Rahmentaktperiode das Zeichen für Rufanschaltung im kommenden Datenstrom DE erkannt wird, ein Speicher an einem Ausgang R zur Rufeinrichtung gesetzt wird. Wird auf die gleiche Weise das Zeichen für Rufabschaltung erkannt, so wird der Speicher zurückgesetzt.

Die Nummernanzeige 29 wird folgendermaßen gesteuert. Wird zusammen mit dem Kopffeld für Fernsprechen im Zeichenfeld einer Rahmentaktperiode das international genormte Zeichen im kommenden Datenstrom DE erkannt, so werden die letzten vier Bits in paralleler Form zusammen mit einem Ausleseimpuls (strobe) an den Steuerleitungen DD der Anzeigeeinrichtung 29 zur Verfügung gestellt.

Das Wählen wird folgendermaßen durchgeführt. Wird mittels der Tasten der Wähleinrichtung 27 über die vier Schnittstellenleitungen DT die zentrale Einheit 37 angesteuert, so werden die dort eingehenden Tastencodezeichen in entsprechende Binärcodezeichen umgewandelt. Die Binärcodezeichen werden, zusammen mit dem Zeichen für »Fernsprechen« im Kopffeld, im vierten bis siebenten Bit des Zeichenfeldes einer Rahmentaktperiode in den gehenden Datenstrom eingeblendet. Den ersten drei Bits des Zeichenfeldes wird dabei die Bitfolge »110« zugeordnet.

Grundsätzlich wird bei der Signalisierung eine Zeichensicherung durch Paritätsprüfung mit Bestätigung vorgenommen. Bei erhöhter Anforderung an die Zeichensicherung kann im Sicherungsfeld jeder Rahmentaktperiode ein Fehlererkennungscodezeichen in den gehenden Datenstrom eingeblendet werden. Dieses Codezeichen wird dann empfangsseitig geprüft und bestätigt.

An der Schnittstelle I zur Zusatzeinrichtung 3 oder 7 werden wie bereits erwähnt der Bittakt, der Worttakt und der Rahmentakt zur Verfügung gestellt (Leitungen TB, TW und TR). Zur Sicherung der Priorität wird die Schnittstellenleitung FR passiv geschaltet, sobald ein vom Gabelumschalter 25 herkommendes Belege- oder Auslösezeichen oder ein von der Wähleinrichtung 27 kommendes Wählzeichen zur Übertragung über den Datenbus 39 zur Verfügung steht. Die Zeichenübertragung wird verzögert, solange die Schnittstellenleitung AK von der Zusatzeinrichtung her aktiv geschaltet ist. Auf diese Weise ist sichergestellt, daß die Übertragung eines möglicherweise bereits von der Zusatzeinrichtung begonnenen Zeichens vervollständigt wird.

Die Schnittstellenleitung FR dient auch zur Information der jeweiligen Zusatzeinrichtung 3 oder 7 über den Betriebszustand der Teilnehmerendeinrichtung. Sie kann nur aktiv geschaltet sein, wenn Synchronisation vorhanden ist und ein Belegungsaufforderungszeichen empfangen wurde.

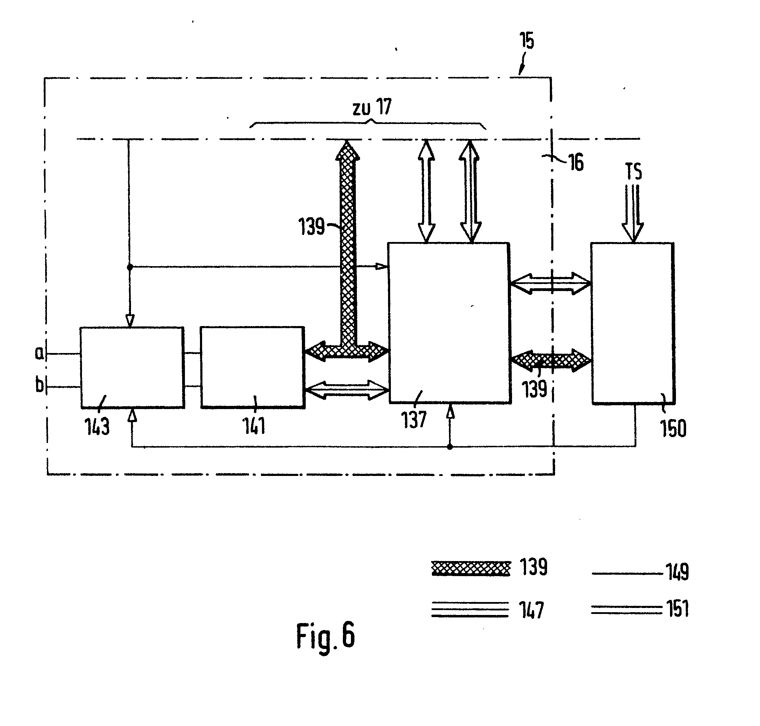

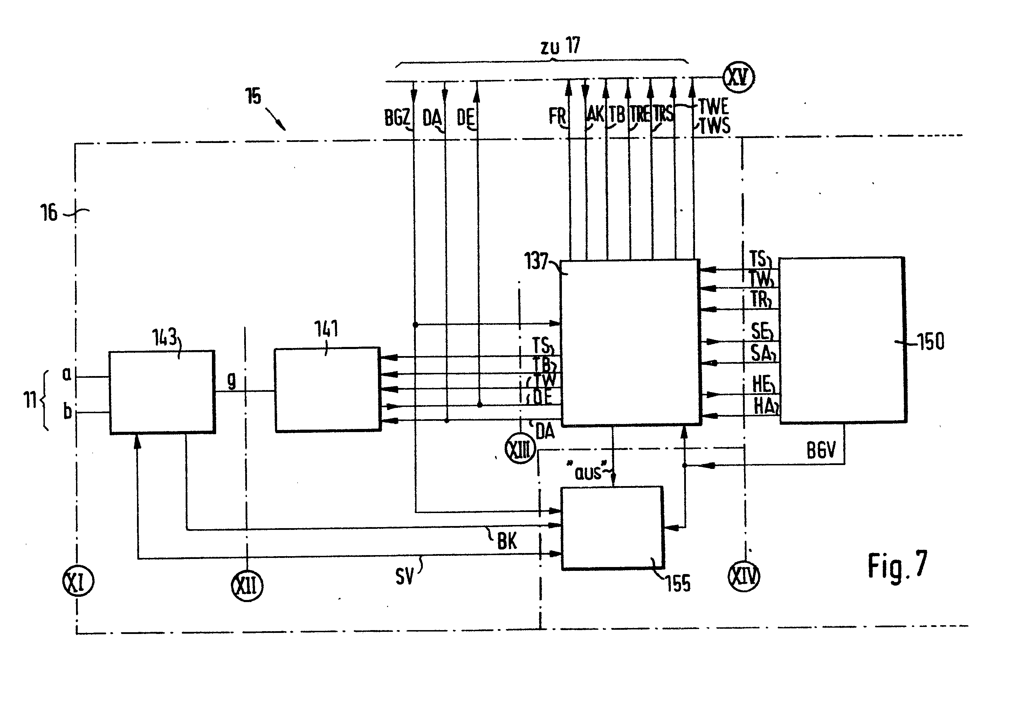

Die aus den Figuren 6 und 7 ersichtliche Teilnehmer-Anschlußschaltung 15 — auch als Teilnehmerschaltung bezeichnet — ist das teilnehmerindividuelle Bindeglied zwischen Teilnehmeranschluß, d. h. Teilnehmer-Endeinrichtung 1 und -Anschlußleitung 11, den weiteren Einrichtungen der Vermittlungsstelle — wie die Steuerung, das Koppelfeld, usw. (in der Zeichnung nicht dargestellt) — und der Zusatzdiensteinrichtung 17. Die einzelnen Schaltungsteile, die einen ähnlichen Aufbau und ähnliche Funktionen wie die entsprechenden Teile der Endeinrichtung 1 aufweisen, sind mit entsprechenden, um eine Hunderter-Ziffer ergänzten Bezugszeichen versehen. Es sind dies im wesentlichen eine zentrale Einheit 137, eine Richtungstrennungseinheit 141 und eine Stromversorgungseinheit 143, welche auch hier durch einen seriellen Datenbus 139, durch Steuerleitungen 147, durch Ein/Aus-Leitungen 149 sowie durch Prioritätsleitungen 151 (vgl. Fig. 6) miteinander verbunden sind.

Die Grundausführung 16 der Anschlußschaltung 15 ist so ausgeführt, daß sie über eine sehr geringe Anzahl von Steckverbindungen an die Vermittlungsstelle und an die Zusatzdiensteinrichtung 17 angeschlossen werden kann. Diese Vereinfachung wird unter anderem dadurch erreicht, daß der Takt der Vermittlungsstelle als Bezugs- oder Systemtakt verwendet wird und daß der serielle 10-Bit-Datenbus verwendet wird.

Die Stromversorgungseinheit 143 kann für einen Zwei-Draht-Anschluß (in der Zeichnung dargestellt) oder einen Vier-Draht-Anschluß ausgebildet sein. Sie enthält Übertrager zur Einkopplung des Speisestromes in die Teilnehmeranschlußleitung 11, wobei im ersten Fall der Strom in die a- und b-Ader und in dem letzten Fall in die c-, d-, e- und f-Ader eingekoppelt wird.

Die Stromversorgungseinheit ist auch hier mit einer Belegungserkennungsschaltung in Form eines Bitstromdetektors versehen (bei Vierdraht-Betrieb nur in kommender Richtung), der anspricht, wenn der Teilnehmeranschluß belegt wird. Der Leitungszustand wird über eine Steuerleitung angezeigt.

Der in die Adern der Anschlußleitung 11 eingekoppelte Strom wird durch einen Serienregler auf einen bestimmten konstanten Wert eingestellt. Der den Belegungszustand auf der Anschlußleitung 11 überwachende und dem Übertragungsweg parallelgeschaltete Bitstromdetektor ist gleich aufgebaut wie der Bitstromdetektor der teilnehmerseitigen Stromversorgungseinheit 41.

Er besteht aus einem Empfänger mit hochohmigem Eingang und Ansprechschwelle. Ein festgestellter Belegungszustand wird über eine Schnittstellenleitung BK (Fig. 7) angezeigt.

Mit dem Einkoppelübertrager wird die erforderliche Potentialtrennung und Pegelanpassung zwischen der Anschlußschaltung 15 und der Anschlußleitung 11 durchgeführt. Innerhalb der Anschlußschaltung 15 ist der Übertragungsweg unsymmetrisch geführt (vgl. Schnittstellenleitung g in Fig. 7).

Die Anschlußschaltung 15 und alle nachfolgenden Einrichtungen sind durch Schutzeinrichtungen in der Stromversorgungseinheit 143 vor möglicherweise auf der Anschlußleitung 11 auftretenden Überspannungen geschützt.

Die Stromversorgungseinheit für einen Vierdraht-Anschluß unterscheidet sich von der vorstehend beschriebenen dadurch, daß hier der Strom über je einen Einkoppelübertrager in die c-, d- und die e-, f-Adern eingekoppelt wird, und daß der Bitstromdetektor den Bitstrom an den e- und f-Adern überwacht.

Die Richtungstrennungseinheit 141 entspricht der der Endeinrichtung 1. Sie kann entweder für einen Zweidraht-Anschluß ausgeführt sein, und eine Trenneinrichtung enthalten, welche nach einem Zeit- oder Frequenzgetrenntlageverfahren oder aber nach einem Gleichlageverfahren arbeitet, sie kann aber auch für einen Vierdraht-Anschluß vorgesehen sein.

Die Richtungstrennungseinheit 141 enthält Leitungstreiber und Empfänger. In ihr wird auch die Leitungscodierung durchgeführt. Der dazu erforderliche Bittakt wird in gehender Richtung aus dem Takt der Vermittlungsstelle (sog. Mastertakt) gewonnen und steht auch der zentralen Einheit 137 zur Verfügung.

Von der teilnehmerseitigen Richtungstrennungseinheit 41 unterscheidet sich die Einheit 141 nur dadurch, daß hier der Leitungscodierer im Ruhezustand abgeschaltet ist und von dem Belegungsdetektor in der Stromversorgungseinheit 143, von der Vermittlungsstelle oder von der Zusatzdiensteinrichtung 17 her eingeschaltet werden kann. Hierzu sind drei Schnittstellenleitungen BK, BGV und BGZ vorhanden, die zu einer noch zu beschreibenden Stromquelle führen (Fig. 7). Damit die Laufzeitverzögerung auf der Anschlußleitung 11 keinen Einfluß auf die Taktzuordnung hat, wird im eingeschwungenen Zustand ein Phasenabgleich vorgenommen.

Da die zentrale Einheit 137 wie erwähnt von der Vermittlungsstelle getaktet wird, arbeitet die Amtsseite des digitalen Teilnehmeranschlusses als sog. »master« und die Teilnehmerseite als sog. »slave«. Durch einen Block 150 sind in der Zeichnung Bestandteile der Vermittlungsstelle — wie die Steuerung und das Koppelfeld — angedeutet, die über eine Steuerleitung TS mit dem Systemtakt versorgt werden (Fig. 6).

Die zentrale Einheit 137 enthält Einrichtungen zum Erzeugen des Synchronisiermusters, zur Erkennung der Synchronisation und zur Mulitplexbildung für das Einblenden und Auslesen von Information aus dem Haupt- und dem Zusatzkanal in den bzw. aus dem 10-Bit-Datenbus. Der Hauptkanal wird fest der Vermittlungseinrichtung, der Zusatzkanal für Daten fest der Zusatzdiensteinrichtung 17 zugeordnet. Der Zusatzkanal für Signalisierung ZKS in kommender Richtung wird je nach dem Kopffeld eines Signalisierungswortes in Richtung Fernsprechvermittlungsstelle oder in Richtung Zusatzdiensteinrichtung 17 geleitet. Der Datenfluß ist somit eindeutig gesteuert. An der Schnittstelle XII zur Richtungstrennungseinheit 141 wird der 10-Bit-Kanal übertragen. An der Schnittstelle XIV zur Vermittlungsstelle 150 werden nur der Hauptkanal und die ihm zugeordnete Signalisierung übertragen und an der Schnittstelle XV zur Zusatzdiensteinrichtung wird wiederum der 10-Bit-Bus hingeführt. Die Schnittstellen XIV und XV werden mit dem Systemtakt von 2048 kHz betrieben.

Für die Signalisierung in gehender Richtung steuert die zentrale Einheit 137 auch die Priorität zwischen Vermittlungseinrichtung 150 und Zusatzdiensteinrichtung 17, und zwar stets zu Gunsten des Fernsprechens. Die zentrale Einheit 137 steuert alle zeitlichen Abläufe zwischen dem Datenbus 139 (Schnittstelle XIII), der Vermittlungseinrichtung (Schnittstelle XIV) und der Zusatzdiensteinrichtung (Schnittstelle XV).

Der Systemtakt, der Worttakt und der Rahmentakt stehen an den Leitungen TS, TW und TR der Schnittstelle XIV zur Verfügung. Der Bittakt (80 kHz) und alle zur Multiplexbildung und Zeitlagenumordnung erforderlichen Schreib- und Lesetakte werden von diesem Takt abgeleitet. Bittakt-, Worttakt- und Rahmentaktperiode beginnen gleichzeitig.

Das Sychronisiermuster wird in der zentralen Einheit 137 erzeugt, indem das fest vorgegebene Synchronisierwort in das neunte Bit der ersten 8 Worttaktperioden jeder Rahmentaktperiode in den gehenden Datenstrom DA eingeblendet wird. In umgekehrter Richtung wird aus jedem neunten Bit der kommenden Daten DE das von der Teilnehmerendeinrichtung 1 wieder zurückgesendete Synchronisierwort selektiert.

In den übrigen Bits des gehenden Datenstromes welche nicht für das Synchronisierwort in Anspruch genommen sind, wird ein die Synchronisierung unterstützendes Bitmuster eingeblendet. Die Einblendung wird unterbrochen, sobald Synchronisation vorhanden ist. Während der Belegungsphase ist auch der ankommende Datenstrom DA mit einem die Synchronisierung unterstützenden Muster versehen. Dieses Muster wird ausgewertet und dazu verwendet, die Synchronisierung zu beschleunigen. Die Synchronisierung gilt als gesichert, wenn das Synchronisierwort zweimal hintereinander erkannt worden ist. Wird das Synchronisierwort zweimal hintereinander nicht erkannt, so wird die Synchronisierung von neuem eingeleitet.

Nach dem Erkennen der Synchronisierung wird im Zeichenfeld einer Rahmentaktperiode ein Belegungsaufforderungszeichen in den gehenden Datenstrom eingeblendet, und zwar zusammen mit dem Code für »Fernsprechen« im Kopffeld eines Synchronisierwortes.

Der Hauptkanal auf der Schnittstellenleitung DE des Datenbusses 139 ist dem 8-Bit-Kanal der Vermittlungseinrichtung auf der Schnittstellenleitung HE zugeordnet. Umgekehrt ist der 8-Bit-Kanal der Vermittlungseinrichtung 150 an der Schnittstellenleitung HA fest dem Hauptkanal innerhalb des 10-Bit-Kanals an der Schnittstellenleitung DA zugeordnet. Hierbei wird der logische Zustand der ersten 8 Bit jeder Worttaktperiode im 10-Bit-Kanal in die ersten 8 Bits einer entsprechenden Worttaktperiode des 8-Bit-Kanals übertragen und umgekehrt. Die zentrale Einheit 137 enthält die dafür erforderlichen Speicher.

Wird an der Schnittstellenleitung DE im Kopffeld einer Rahmentaktperiode das Codezeichen für »Fernsprechen« erkannt, so wird der logische Zustand der 8 Bits der Zeichenfeldes in das zweite bis neunte Bit einer zugeordneten Rahmentaktperiode des Signalisierungskanals an der Schnittstellenleitung SE übertragen. Hierbei wird im ersten Bit der Signalisierungszustand (logisch 1) angezeigt. Wird das Kopffeld für Fernsprechen nicht erkannt, so wird der logische Zustand der 16 Bits des Kopf- und Zeichenfeldes in das zweite bis siebzehnte Bit einer zugeordneten Rahmentaktperiode des Datenkanals DE der Zusatzdiensteinrichtung 17 übertragen.

In gehender Richtung wird der Zusatzkanal für Signalisierung entsprechend der Priorität entweder von der Vermittlungseinrichtung 150 oder von der Zusatzdiensteinrichtung 17 in Anspruch genommen.

Wird an der Schnittstellenleitung SA im ersten Bit einer Rahmentaktperiode der Zustand logisch 1 erkannt, so wird der Zustand des zweiten bis neunten Bits im Zeichenfeld einer Rahmentaktperiode in den 10-Bit-Kanal an der Schnittstellenleitung DA eingeblendet, und zwar zusammen mit dem Code für »Fernsprechen« im Kopffeld. Sonst wird der Zustand des zweiten bis siebzehnten Bits des Datenkanals an der Schnittstellenleitung DA der Schnittstelle XV in das Kopf- und Zeichenfeld übertragen.

Der Zusatzkanal für Daten in dem 10-Bit-Kanal an der Schnittstellenleitung DE ist fest dem Datenkanal der Zusatzdiensteinrichtung an der Schnittstelle XV zugeordnet. Umgekehrt ist der Datenkanal der Zusatzdiensteinrichtung an der Leitung DA der Schnittstelle XV fest dem Zusatzkanal für Daten im 10-Bit-Kanal an der Schnittstellenleitung DA zugeordnet. Hierbei wird der logische Zustand des zehnten Bits jeder Worttaktperiode des 10-Bit-Kanals in das erste Bit einer entprechenden Worttaktperiode des Datenkanals der Zusatzdiensteinrichtung übertragen und umgekehrt.

Bei der Signalisierung im 10-Bit-Kanal wird grundsätzlich eine Zeichensicherung durch Paritätsprüfung mit Bestätigung vorgenommen. Bei erhöhten Sicherungsanforderungen kann im Sicherungsfeld jeder Rahmentaktperiode ein Fehlererkennungscode in den gehenden Datenstrom eingeblendet werden. Dieser Code wird dann empfangsseitig geprüft und bestätigt.

Sobald an der Leitung SA der Schnittstelle XIV im ersten Bit einer Rahmentaktperiode der logische Zustand 1 erkannt wird, wird die Leitung FR an der Schnittstelle XV solange passiv geschaltet, bis das zur Verfügung gestellte Zeichen in den 10-Bit-Kanal eingeblendet ist. Sofern die Schnittstellenleitung AK aktiv geschaltet ist, wird die Zeichenübertragung entsprechend verzögert. Auf diese Weise ist sichergestellt, daß die Übertragung eines eventuell bereits von der Zusatzdiensteinrichtung 17 her begonnenen Zeichen vervollständigt wird. Die Schnittstellenleitung FR kann nur aktiv geschaltet werden, wenn Synchronisation vorhanden ist.

An der Schnittstelle XV sind neben der Leitung TB für den Bittakt Leitungen TRE und TRS für den Rahmentakt im Empfangs- bzw. Senderichtung sowie Leitungen TWE und TWS für den Worttakt in Empfangs- bzw. in Senderichtung vorhanden.

Zur Stromversorgung des Teilnehmeranschlusses dient eine zentrale Konstantstromquelle 155 die über Leitungen BK, BGZ und »aus« ein- bzw. ausgeschaltet werden kann. Der von ihr gelieferte Konstantstrom wird in der Stromversorgungseinheit 143 in die Anschlußleitung 11 eingekoppelt.

Einzelheiten der Zusatzeinrichtung zu der teilnehmerseitigen Endeinrichtung 1 sind aus Fig. 8 ersichtlich. Es gibt von ihnen zwei verschiedene Arten: Zusatzeinrichtung 3, 3A für Datenübertragung über den Hauptkanal und Zusatzeinrichtungen 7, 7A für Datenübertragung über den Zusatzkanal (vgl. auch Fig. 1). Bei den Zusatzeinrichtungen 3, 3A handelt es sich hauptsächlich um Datenübertragungseinrichtungen mit V- oder X-Schnittstellen gemäß CCITT-Empfehlungen. Die Zusatzeinrichtungen 7, 7A können dagegen sehr vielfältiger Art sein, wie etwa Bildschirmtext-, Fernschreib-, Telefax-Geräte usw.

Die Zusatzeinrichtungen 3, 3A, 7 und 7A sind jeweils über Schnittstelleneinrichtungen 157, 159, 161 bzw. 163 an die Endeinrichtung 1 angeschaltet. Die Schnittstelle enthält, wie bereits erwähnt, den Datenbus 39, die Steuerleitungen 47, die Leitungen 49 zum Ein/und Ausschalten der Endeinrichtungen 1 sowie die Leitungen 51 zum Sichern der Priorität.

Für die Signalisierung in gehender Richtung ist grungsätzlich die Priorität der Endeinrichtung 1 vorgegeben. Sind mehr als eine Zusatzeinrichtung 3, 3A oder 7, 7A vorhanden, so wird durch Leitungen 165 bzw. 167 die Priorität zwischen den jeweiligen Zusatzeinrichtungen gesichert.

Die Schnittstellen 161 und 163 für Datenübertragung über den Zusatzkanal enthalten Einrichtungen zum Einblenden und Auslesen von Belegungszeichen und Auslösezeichen in gehender bzw. aus kommender Richtung in den bzw. aus den 10-Bit-Datenbus. Bei gehender Belegung wird die Stromversorgungseinheit 43 in der Endeinrichtung 1 eingeschaltet. Außerdem sind Einrichtungen zum Einblenden und Auslesen in den bzw. aus den Datenbus 39 vorhanden, so daß der Zusatzkanal für Daten als transparenter 8-kbit/s-Kanal einschließlich Takt zur Verfügung steht.

Für das Einblenden bzw. Auslesen erforderliche Schreib- und Lesetakte werden von Bittakt, Rahmentakt und Worttakt abgeleitet.

Die Einrichtungen 169 und 171, mit denen die Schnittstelleneinrichtungen 161 bzw. 163 auf die Schnittstellenleitungen 39, 47, 49 und 51 zugreifen, sind in der Zeichnung gestrichelt dargestellt. Entsprechendes gilt für die Zugriffseinrichtungen 173 und 175 der Schnittstellenschaltungen 157 bzw. 159.

Für den Fall, daß aus Gründen der Prioritätssicherung zu Gunsten der Endeinrichtung 1 die Signalübertragung verzögert werden muß, sind entsprechende Zwischenspeicher vorgesehen. Die Schnittstellenschaltungen 161, 163 enthalten außerdem Einrichtungen (Codewandler, Speicher usw.) zur Anpassung des Datenkanals der jeweiligen Zusatzeinrichtung an den Zusatzkanal für Daten, welcher vom allgemeinen Teil der Schnittstelleneinrichtung her in transparenter Form zur Verfügung steht. Außerdem findet hier die entgültige Anpassung an die jeweils in der Zusatzeinrichtung 7, 7A übliche Belegungsart statt.

Die Schnittstellenschaltungen 157, 159 für Datenübertragung über den Hauptkanal enthalten Einrichtungen (Codewandler, Speicher usw.) zur Anpassung des Datenkanals der Zusatzeinrichtung an den 10-Bit-Datenbus. Die hierzu erforderlichen Schreib- und Lesetakte werden von den Bit- und dem Worttakt abgeleitet.

Mit Belegen des Hauptkanals HKA durch Datendienste über die Zusatzeinrichtung 3 wird über die jeweiligen Schnittstellenschaltung der Codec in der Umwandlungseinheit 35 der Endeinrichtung 1 abgeschaltet. Die Zusatzeinrichtung wird nur freigegeben, wenn Synchronisation vorhanden ist.

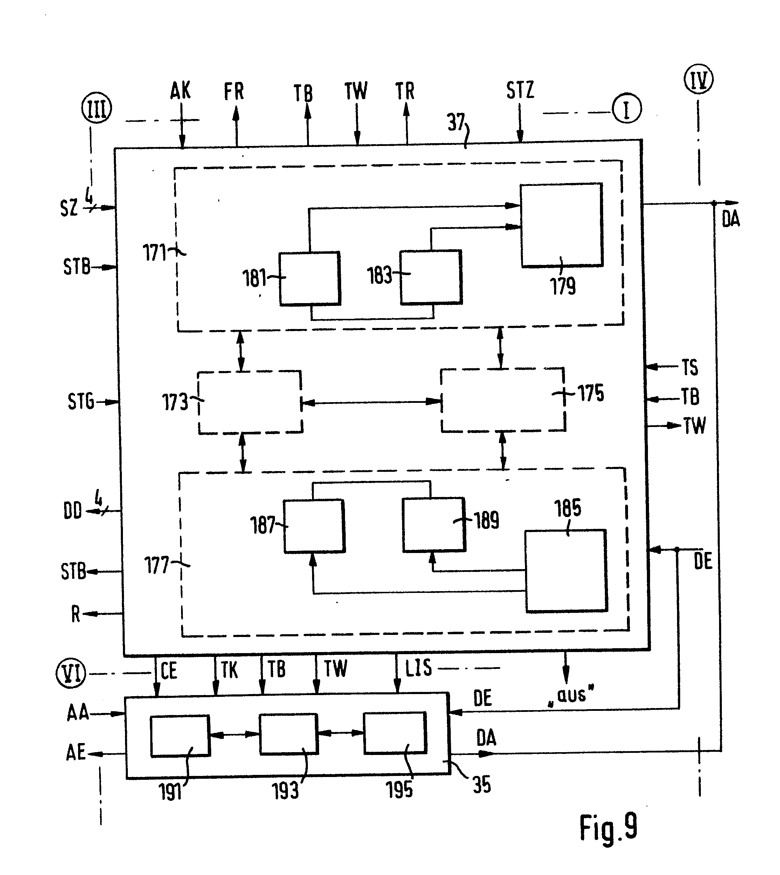

Der Aufbau der zentralen Einheit 37 und der Umwandlungseinheit 35 der teilnehmerseitigen Endeinrichtung 1 sind aus Fig. 9 ersichtlich. Die zentrale Einheit 37 enthält im wesentlichen einen Sender 171, eine Steuerung 173, eine Taktversorgung 175 und einen Empfänger 177, die durch entsprechende Leitungen untereinander verbunden sind. Der Sender 171 enthält einen Senderspeicher 179, eine Synchronisierschaltung 181 und eine Signalcodierschaltung 183. Der Empfänger 177 weist einen Empfangsspeicher 185, eine Synchronisierschaltung 187 und eine Signaldecodierschaltung 189 auf.

Die die zentrale Einheit mit den weiteren Schaltungsteilen der Endeinrichtung 1 verbindenden Schnittstellenleitungen entsprechen den Schnittstellenleitungen von Fig. 5, wie durch die strichpunktiert angedeuteten Schnittstellen I, III, IV und VI kenntlich gemacht ist. An der Schnittstelle VI zwischen der zentralen Einheit 37 und der Umwandlungseinheit 35 sind die Leitungen L zur Übertragung von Leseimpulsen und S zur Übertragung von Schreibimpulsen zu einer gemeinsamen Leitung LIS zusammengefaßt.

Über die Schnittstelle I kann die zentrale Einheit 37 mit den Zusatzeinrichtungen 3 und 7 sowie mit der Ergänzungsausstattung 53 verbunden werden, über die Schnittstelle III ist sie mit dem Fernsprechapparat 2 verbunden, über die Schnittstelle IV ist sie an die Richtungstrennungseinheit 41 angeschlossen und die Leitung »aus« dient zum Ausschalten der Stromversorgungseinheit 43.

Die Umwandlungseinheit 35 enthält einen das Sprachband begrenzenden Filter 191, ein die D/A- und A/D-Wandlung durchführenden Codec 193 sowie einen Speicher 195, in dem die digitalisierten Sprachsignale in gehender und kommender Richtung zwischengespeichert werden.

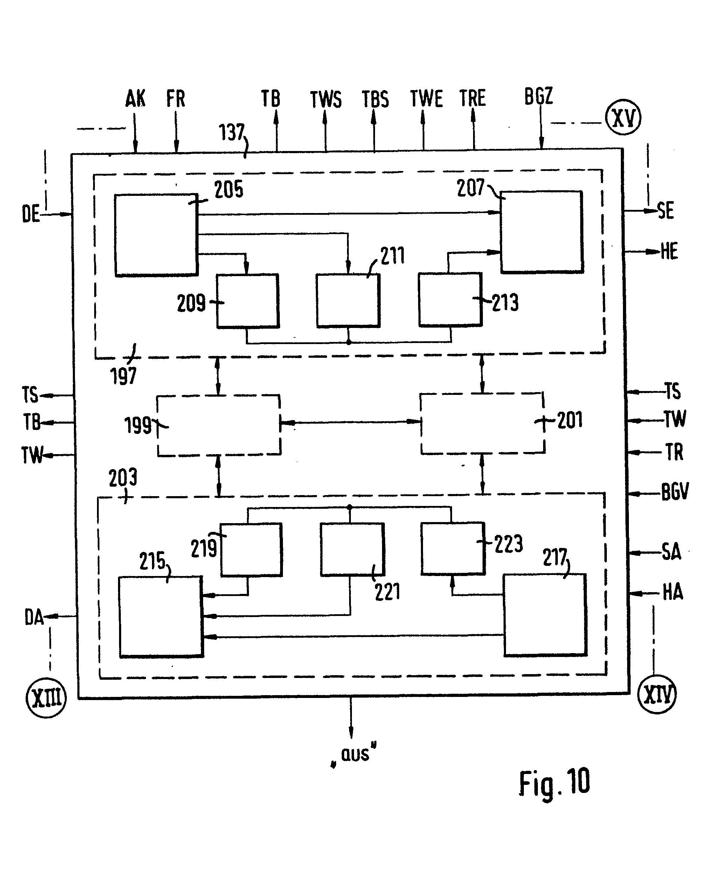

Aus Fig. 10 ist der Aufbau der zentralen Einheit 137 der vermittlungsseitigen Teilnehmer-Anschlußschaltung 15 ersichtlich. Sie enthält einen Empfänger 197, eine Steuerung 199, eine Taktversorgung 201 und einen Sender 203, die durch entsprechende Leitungen untereinander verbunden sind.

Der Empfänger 197 weist einen Empfangsspeicher 205, einen Sendespeicher 207, eine Signaldecodierschaltung 209, eine Synchronisierschaltung 211 sowie eine Signaldecodierschaltung 213 auf.

Der Sender 203 weist einen Sendespeicher 207, einen Empfangsspeicher 217, eine Signalcodierschaltung 219, eine Synchronisierschaltung 221 sowie eine Signaldecodierschaltung 223 auf.

Die Schnittstellenleitung, die die zentrale Einheit 137 mit den weiteren Schaltungsteilen der Anschlußschaltung 15 verbinden, sind die gleichen wie in Fig. 7 und dort bereits zum Teil erläutert worden. Dies ist auch durch die strichpunktiert angedeuteten Schnittstellen XIII, XIV und XV kenntlich gemacht. Über die Schnittstelle XIII ist die zentrale Einheit 137 mit der Richtungstrennungseinheit 141 verbunden. Über die Schnittstelle XIV ist sie an die Einrichtungen 150 der Vermittlungsstelle angeschlossen und über die Schnittstelle XV kann sie mit der Zusatzdiensteinrichtung 17 verbunden werden, die die Verbindung zwischen dem Hauptkanal im Falle der Datenübertragung sowie dem Zusatzkanal für Datenübertragung mit den verschiedenen Datennetzen oder z. B. mit der Bildschirmtext-Zentrale herstellt. Eine mit »aus« gekennzeichnete Leitung dient zum Ausschalten der Stromquelle 155.

Die an den Schnittstellen XI bis XV der Figuren 7 und 10 vorgesehenen Leitungen werden nun im Zusammenhang aufgeführt. An der Schnittstelle XI sind es bei dem in der Zeichnung dargestellten symmetrischen Zweidraht-Anschluß die a- und b-Adern der Teilnehmer-Anschlußleitung 11. Im Falle eines symmetrischen Vierdraht-Anschlusses sind hier die c-, d-, e- und f-Adern vorhanden.

An der Schnittstelle XII ist bei einem Zweidraht-Anschluß eine Leitung g für die unsymmetrische Übertragung im Leitungscode, im Falle des Vierdraht-Anschlusses sind die Leitung i für kommende Daten, unsymmetrisch, im Leitungscode sowie eine Leitung j für gehende Daten, unsymmetrisch, im Leitungscode vorgesehen. Außerdem eine Leitung BK für Belegung kommend und eine Leitung SV für die Konstantstromversorgung.

An der Schnittstelle XIII sind Leitungen vorhanden: TS für den Systemtakt, TB für den Bittakt, TW für den Worttakt, DE für kommende Daten im Binärcode und DA für gehende Daten im Binärcode. Die Schnittstelle XIV weist folgende Leitungen auf: TS, TW und TR für den System-, Wort- bzw. Rahmentakt, SE für Signalisierung kommend, SA für Signalisierung gehend, HE für Hauptkanal kommend, HA für Hauptkanal gehend und BGV für Belegen von der Vermittlungseinrichtung 150 aus.

An der Schnittstelle XV sind folgende Leitungen vorgesehen: BGZ für Belegen von der Zusatzdiensteinrichtung 17 aus, DA für gehende Daten im Binärcode, DE für kommende Daten im Binärcode, FR zur Freigabe (für Signalisierung von der Zusatzdiensteinrichtung), AK zum Aktiv-Schalten (für Signalisierung von der Zusatzdiensteinrichtung), TB für den Bittakt, TWS für den Worttakt in Senderichtung, TBS für den Bittakt in Senderichtung, TWE für den Worttakt in Empfangsrichtung, TRS für den Rahmentakt in Senderichtung und TRE für den Rahmentakt in Empfangsrichtung.

Sowohl die zentrale Einheit 37 als auch die zentrale Einheit 137 sind als reine Hardwareschaltungen ausgeführt, die aus handelsüblichen aktiven und passiven Bauelementen gebildet werden können, zweckmäßigerweise als integrierte Schaltung ausgeführt sind.

Der Zusatzkanal ZKD (vgl. Fig. 1) kann entweder zur Übertragung eines Datendienstes (z. B. Bildschirmtext, Teletex oder Telefax) zu einer Zeit verwendet werden, wobei aber zu verschiedenen Zeiten verschiedene Dienste übermittelt werden können, es ist aber auch möglich, daß Verbindungen für die verschiedenen Dienste gleichzeitig hergestellt werden, wobei den einzelnen Diensten ein fester Unterrahmen zugeteilt wird.

Im Signalisier- und Synchronisierkanal ZKS können neben der Signalisierung für den Hauptkanal HKA und den Zusatzdatenkanal ZKD weitere Signale zwischen einem Teilnehmer und einer zentralen Einrichtung, z. B. einer Alarmzentrale, ausgetauscht werden.

Die Kanaleinteilung bei der Nachrichtenübermittlung kann auch folgendermaßen erfolgen: ein Hauptkanal mit 64 kbit/s, ein Synchronisierkanal mit 2 kbit/s und ein Zusatzdaten- und Signalisierkanal mit 14 kbit/s, wobei die Zusatzdaten und die Signalisierdaten gleichberechtigt als Informationspakete, gegebenenfalls für mehrere Dienste gleichzeitig, übertragen werden.

Durch das Aufteilen der Endeinrichtung 1 und der Anschlußschaltung 15 in mehrere Funktionseinheiten und durch das eindeutige Festlegen von Schnittstellen wird ein modularer Aufbau des erfindungsgemäßen Nachrichtenübermittlungssystem ermöglicht. Insbesondere kann das System an verschiedene Richtungstrennungsverfahren angepaßt werden, indem die auf einer Leiterplatte angeordnete Richtungstrennungseinheit 41 bzw. 141 ausgetauscht wird. Die Trennung der Grundausführung der Endeinrichtung 1 von der über die Schnittstelle I (Fig. 5 und Fig. 6) durch einfache Steckverbindungen anschließbaren Komfortausstattung 53, Zusatzeinrichtung 3 für Datenübertragung über den Hauptkanal und Zusatzeinrichtung 7 für Datenübertragung über den Zusatzkanal ermöglicht eine Fernspeisung des Fernsprechapparats in der Grundausführung über die Amtsleitung. Dagegen werden die Zusatzeinrichtungen und die Komfortausstattung ortsgepeist.

Während einer voraussichtlich noch länger dauernden Übergangszeit wird das an sich anzustrebende volldigitalisierte Fernsprechnetz noch nicht vorhanden sein. Man wird deshalb möglicherweise digitale Teilnehmeranschlüsse in Verbindung mit analogen Ortsvermittlungsstellen betreiben müssen. In solchen Fällen muß zwischen die jeweiligen Teilnehmer-Anschlußschaltung 15 und die analoge Vermittlungsstelle eine geeignete Anpassungseinrichtung eingefügt werden, die u. a. für eine D/A- und A/D-Wandlung und die Signalisierungsanpassung sorgt.

**Patentansprüche**

1. Digitales Nachrichtenübermittlungssystem mit einer vermittlungsseitigen Anschlußschaltung (15) und einer teilnehmerseitigen Endeinrichtung (1), die durch eine jeweils über eine Richtungstrennungseinheit (41, 141) angeschlossene Anschlußleitung miteinander verbunden sind und die jeweils eine zentrale Einheit (37, 137) aufweisen, durch die eine zweiseitig gerichtete Übertragung der digitalen Nachrichtensignale im Zeitvielfach gesteuert wird, dadurch gekennzeichnet, daß die zentralen Einheiten (137, 37) in

21 **0 036 622** 22

der Anschlußschaltung (15) und in der Endeinrichtung (1) jeweils durch einen Datenbus (139, 39) sowie durch Steuer- und Taktleitungen (47, 49, 51) mit der vermittlungsseitigen Richtungstrennungseinheit (141) bzw. mit der teilnehmerseitigen Richtungstrennungseinheit (41) und mit einer teilnehmerseitigen Umwandlungseinheit (35) verbunden sind, und daß das Ein- und Ausblenden der in der Umwandlungseinheit (35) aus analogen Sprachsignalen umcodierten oder von einer Zusatzeinrichtung (3, 7) gelieferten Digitalsignale in den Datenbus (139, 39) durch die zentralen Einheiten (137, 37) derart gesteuert wird, daß auf der Anschlußleitung (11) ein Hauptkanal (HKA) und ein Zusatzkanal (ZKS, ZKD) gebildet werden.

2. Nachrichtenübermittlungssystem nach Anspruch 1, dadruch gekennzeichnet, daß der zur Übertragung von Sprach- oder von Datensignalen bestimmte Hauptkanal (HKA) angenähert die vier- bis achtfache Übertragungskapazität des zur Übertragung von Daten und Steuerzeichen bestimmten Zusatzkanals (ZKS, ZKD) aufweist.

3. Nachrichtenübermittlungssystem nach Anspruch 1 oder 2, dadurch gekennzeichnet, daß der Zusatzkanal einen Signalisier- und Synchronisierkanal (ZKS), sowie einen Zusatzkanal (ZKD) aufweist.

4. Nachrichtenübermittlungssystem nach Anspruch 3, dadurch gekennzeichnet, daß die Übertragungskapazität des Signalisier- und Synchronisierkanals (ZKS) in etwa der des Zusatzdatenkanals (ZKD) entspricht.

5. Nachrichtenübermittlungssystem nach Anspruch 4, dadurch gekennzeichnet, daß die Bitrate des Hauptkanals (HKA) 64 kbit/s, die des Signalisier- und Synchronisierkanals (ZKS) 8 kbit/s und die des Zusatzdatenkanals ebenfalls 8 kbit/s beträgt.

6. Nachrichtenübermittlungssystem nach einem der Ansprüche 3 bis 5, dadurch gekennzeichnet, daß der Signalisier- und Synchronisierkanal (ZKS) für die Übertragung von Ereignissignalisierdaten mit einer Bitrate von 6 kbit/s und von Synchronisierbitmuster mit einer Bitrate von 2 kibt/s ausgelegt ist.

7. Nachrichtenübermittlungssystem nach einem der vorhergehenden Ansprüche, dadurch gekennzeichnet, daß die zwischen der Endeinrichtung (1) und der Anschlußschaltung (15) zu übertragenden Bits zu Wörtern mit 10 Bits und die Wörter zu Rahmen mit 320 Bits zusammengefaßt werden, wobei die Rahmendauer 4 ms beträgt.

8. Nachrichtenübermittlungssystem nach einem der vorhergehenden Ansprüche, dadurch gekennzeichnet, daß der Datenbus (39, 139) als serieller 10-Bit-Bus ausgebildet ist.

9. Nachrichtenübermittlungssystem nach einem der vorhergehenden Ansprüche, dadurch gekennzeichnet, daß durch den Datenbus (39, 139) sowie durch die von der zentralen Einheit (37, 137) ausgehenden Steuer- und Taktleitungen (47, 49, 51) eine Schnittstelle zum Anschluß einer zusätzlichen Ergänzungsausstattung (53) für die Endeinrichtung (1) gebildet wird.

10. Nachrichtenübermittlungssystem nach einem der vorhergehenden Ansprüche, dadurch gekennzeichnet, daß durch den Datenbus (39, 139) sowie durch die von der zentralen Einheit (37, 137) ausgehenden Steuer- und Taktleitungen (47, 49, 51) eine Schnittstelle zum Anschluß einer ersten Zusatzeinrichtung (3) für Datenübertragung über den Hauptkanal (HKA) gebildet wird.

11. Nachrichtenübermittlungssystem nach einem der vorhergehenden Ansprüche, dadurch gekennzeichnet, daß durch den Datenbus (39, 139) sowie durch die von der zentralen Einheit (37, 137) ausgehenden Steuer- und Taktleitungen (47, 49, 51) eine Schnittstelle zum Anschluß einer zweiten Zusatzeinrichtung (7) für Datenübertragung über den Zusatzkanal (ZKD) gebildet wird.

12. Nachrichtenübermittlungssystem nach einem der Ansprüche 3 bis 11, dadurch gekennzeichnet, daß der Zusatzdatenkanal (ZKD) für die gleichzeitige Übermittlung verschiedener Dienste (Bildschirmtext, Telex, Teletex) ausgebildet ist.

13. Nachrichtenübermittlungssystem nach einem der Ansprüche 3 bis 12, dadurch gekennzeichnet, daß der Signalisier- und Synchronisierkanal (ZKS) für die Übermittlung von Signalisierzeichen für den Hauptkanal (HKA) und für den Zusatzdatenkanal (ZKD) ausgebildet ist.

14. Nachrichtenübermittlungssystem nach einem der vorhergehenden Ansprüche, dadurch gekennzeichnet, daß die Endeinrichtung eine Schnittstelle (I) für den Anschluß einer Ergänzungsausstattung (53) aufweist.

15. Nachrichtenübermittlungssystem nach einem der vorhergehenden Ansprüche, dadurch gekennzeichnet, daß die Anschlußschaltung (15) eine Schnittstelle (XV) für den Anschluß einer Zusatzdiensteinrichtung (17) aufweist.

16. Nachrichtenübermittlungssystem nach einem der Ansprüche 3 bis 15, dadurch gekennzeichnet, daß der Hauptkanal (HKA) mit einer Bitrate von 64 kbit/s, der Signalisier- und Synchronisierkanal (ZKS) für die Übertragung von Ereignissignalisierdaten mit einer Bitrate von 2 kbit/s und von Synchronisierbitmuster mit einer Bitrate von 2 kbit/s, und der Zusatzdatenkanal (ZKD) mit einer Bitrate von 12 kbit/s ausgelegt ist.

**Claims**

1. Digital communication system with a line circuit (15) at the exchange and a subscriber terminal equipment (1) which are interconnected by a subscriber line, each via a direction-separating unit (41, 141), and each of which has a central unit (37, 137) which controls two-way transmission of digital intelligence signals on a time division multiplex basis, characterised in that the central units (137, 37) in the line circuit (15) and in the terminal equipment (1) are each connected by a data bus (139, 39) and by control and clock lines (47, 49, 51) to the direction-separating unit (141) in the exchange and to the direction-separating unit (41) and a conversion unit (35) in the terminal equipment and that the gating into and out of the data bus (139, 39) of the digital signals derived from analog speech signals in the conversion unit (35) or provided by an ancillary device (3, 7) is controlled by the central units (137, 37) in such a way that a main channel (HKA) and an additional channel (ZKS, ZKD) are formed on the subscriber line (11).

2. Communication system according to Claim 1, characterised in that the main channel (HKA) intended for the transmission of speech or data signals has about four to eight times the transmission capacity of the additional channel (ZKS, ZKD) intended for the transmission of data and control signals.

3. Communication system according to Claim 1 or 2, characterised in that the additional channel contains a signalling and synchronising channel (ZKS) and an additional data channel (ZKD).

4. Communication system according to Claim 3, characterised in that the transmission capacity of the signalling and synchronising channel (ZKS) is about equal to that of the additional data channel (ZKD).

5. Communication system according to Claim 4, characterised in that the bit rate of the main channel (HKA) is 64 kbits/s and the bit rates of the signalling and synchronisation channel (ZKS] and of the additional data channel are 8 kbits/s.

6. Communication system according to one Claims 3 to 5, characterised in that the signalling and synchronisation channel (ZKS) is designed for the transmission of event signalling data at a bit rate of 6 kbits/s and of synchronising-bit patterns at a bit rate of 2 kbits/s.

7. Communication system according to any one of the preceding claims, claims, characterised in that the bits to be transmitted between the terminal equipment (1) and the line circuit (15) are combined to from 10-bit words and that the words are combined to from 320-bit frames, the frame duration being 4 ms.

8. Communication system according to any one of the preceding claims, claims, characterised in that the data bus (39, 139) is designed as a serial 10-bit bus.

9. Communication system according to any one of the preceding claims, claims, characterised in that the data bus (39, 139) and the control and clock lines (47, 49, 51) originating from the central unit (37, 137) form an interface for the connection of an add-on unit (53) for the terminal equipment (1).

10. Communication system according to any one of the preceding claims, claims, characterised in that the data bus (39, 139) and the control and clock lines (47, 49, 51) originating from the central unit (37, 137) form an interface for the connection of a first additional facility (3) for data transmission over the main channel (HKA).

11. Communication system according to any one of the preceding claims, characterised in that the data bus (39, 139) and the control and clock lines (47, 49, 51) originating from the central unit (37, 137) form an interface for the connection of a second additional facility (7) for data transmission over the additional channel (ZKD).

12. Communication system according to any one of Claims 3 to 11, characterised in that the additional data channel (ZKD) is designed for the simultaneous transmission of different services (viewdata, telex, teletex).

13. Communication system according to any one of Claims 3 to 12, characterised in that the signalling and synchronising channel (ZKS) is designed for the transmission of signalling information for the main channel (HKA) and for the additional data channel (ZKD).

14. Communication system according to any one of the preceding claims, characterised in that the terminal equipment has an interface (I) for the connection of an add-on unit (53).

15. Communication system according to any one of the preceding claims, characterised in that the line circuit (15) has an interface (XV) for the connection of an additional service facility (17).

16. Communication system according to any one of Claims 3 to 15, characterised in that the main channel (HKA) is designed for transmission at a bit rate of 64 kbits/s, that the signalling and synchronising channel (ZKS) is designed for the transmission of event signalling data at a bit rate of 2 kbits/s and of synchronising-bit patterns at a bit rate of 2 kbits/s, and that the additional data channel (ZKS) is designed for transmission at a bit rate of 12 kbits/s.

**Revendication**

1. Système numérique de transmission d'informations comportant un circuit de raccordement (15), côté central, et un équipement terminal (1), côté abonné, reliés entre eux par une ligne, en passant chacun par une unité de séparation de direction (41, 141) et équipés chacun d'une unité centrale (37, 137) commandant la transmission bidirectionnelle de signaux numériques d'information par multiplexage temporel, caractérise en ce que les unités centrales (137, 37) du circuit de raccordement (15) et de l'équipement terminal (1) sont chacune reliées par un bus de données (139, 39) et par des lignes de commande et d'horloge (47, 49, 51) à l'unité de séparation de direction côté central (141) ou à l'unité de séparation de direction côté abonné (41) et á une unité de conversion côté abonné (35), et en ce que l'introduction et l'extraction des signaux numériques, décodés dans l'unité de conversion (35) en signaux analogiques vocaux, ou fournis par un dispositif supplémentaire (3, 7), sur le bus de données (139, 39), sont commandées par l'unité centrale (137, 37) de telle sorte qu'un canal principal (HKA) et un canal supplémentaire (ZKS, ZKD) soient constitués sur la ligne (11).

2. Système de transmission d'informations conforme à la revendication 1, caractérisé en ce que le canal principal (HKA) destiné à transmettre les signaux vocaux et de données possède une capacité de transmission d'environ quatre à huit fois supérieure à celle du canal supplémentaire (ZKS, ZKD) destiné à transmettre des données et des signaux de commande.

3. Système de transmission d'informations conforme à la revendication 1 ou 2, caractérisé en ce que le canal supplémentaire possède un canal de signalisation et de synchronisation (ZKS) ainsi qu'un canal supplémentaire de données (ZKD).

4. Système de transmission d'informations conforme à la revendication 3, caractérisé en ce que la capacité de transmission du canal de signalisation et de synchronisation (ZKS) correspond sensiblement à celle du canal supplémentaire de données (ZKD).

5. Système de transmission d'informations conforme à la revendication 4, caractérisé en ce que le débit binaire du canal principal (HKA) est de 64 kilobits/s, celui du canal de signalisation et de synchronisation (ZKS) de 8 kilobits/s et celui du canal supplémentaire de données également de 8 kilobits/s.

6. Système de transmission d'informations conforme à l'une des revendications 3 à 5, caractérisé en ce que le canal de signalisation et de synchronisation (ZKS) fonctionne avec un débit binaire de 6 kilobits/s pour la transmission de données d'évenement de signalisation et avec un débit binaire de 2 kilobits/s pour la transmission de la configuration binaire de synchronisation.

7. Système de transmission d'informations conforme à l'une des revendications précédentes, caractérisé en ce que les bits devant être transmis entre l'équipement terminal (1) et le circuit de raccordement (15) sont regroupés en mots de 10 bits lesquels sont regroupés en trames de 320 bits, la durée de trame étant de 4 ms.

8. Système de transmission d'informations conforme à l'une des revendications précédentes, caractérisé en ce que le bus de données (39, 139) est conçu sous la forme d'un bus série à 10 bits.

9. Système de transmission d'informations conforme à l'une des revendications précédentes, caractérisé en ce qu'une interface constituée par le bus de données (39, 139) et par les lignes de commande et d'horloge (47, 49, 51) provenant de l'unité centrale (37, 137) permet de raccorder un équipement complémentaire (53) complétant l'équipement terminal (1).

10. Système de transmission d'informations conforme à l'une des revendications précédentes, caractérisé en ce qu'une interface constituée par le bus de données (39, 139) et par les lignes de commande et d'horloge (47, 49, 51) provenant de l'unité centrale (37, 137) permet de raccorder un premier dispositif supplémentaire (3) assurant la transmission des données par le canal principal (HKA).

11. Système de transmission d'informations conforme à l'une des revendications précédentes, caractérisé en ce qu'une interface constituée par le bus de données (39, 139) et par les lignes de commande et d'horloge (47, 49, 51) provenant de l'unité centrale (37, 137) permet de raccorder un second dispositif supplémentaire (7) assurant la transmission des données par le canal supplémentaire (ZKD).

12. Système de transmission d'informations conforme à l'une des revendications 3 à 11, caractérisé en ce que le canal supplémentaire de données (ZKD) est conçu pour la transmission simultanée de différents services (vidéotex, télex, télétex).

13. Système de transmission d'informations conforme à l'une des revendications 3 à 12, caractérisé en ce que le canal de signalisation et de synchronisation (ZKS) est conçu pour la transmission de signaux de signalisation relatifs au canal principal (HKA) et au canal supplémentaire de données (ZKD).

14. Système de transmission d'informations conforme à l'une des revendications précédentes, caractérisé en ce que l'équipement terminal possède une interface (I) pour le raccordement d'une équipement complémentaire (53).

15. Système de transmission d'informations conforme à l'une des revendications précédentes, caractérisé en ce que le circuit de raccordement (15) possède une interface (XV) pour le raccordement d'un dispositif de service supplémentaire (17).

16. Système de transmission d'informations conforme à l'une des revendications 3 à 15, caractérisé en ce que le canal principal (HKA) est prévu pour un débit binaire de 64 kilobits/s, le canal de signalisation et de synchronisation (ZKS) pour un débit binaire de 2 kilobits/s lors de la transmission de données d'évenements de signalisation et pour un débit binaire de 2 kilobits/s lors de la transmission de la configuration binaire de synchronisation, et le canal supplémentaire de données (ZKD) pour un débit binaire de 12 kilobits/s.

Fig.1

| Bit Nr. | 1 | 2 | 3 | 4 | 5 | 6 | 7 | 8 | 9 | 10 |
|---------|---|---|---|---|---|---|---|---|---|----|
|         |   |   | HKA | | | | | | | |
|         |   | ZKS | | | | | | | | |
|         | ZKD | | | | | | | | | |

Fig. 2

| Bit Nr. Wort Nr. | 1 | 2 | 3 | 4 | 5 | 6 | 7 | 8 | 9 | 10 |
|---|---|---|---|---|---|---|---|---|---|---|
| 1 . . . 8 | | | | SPRACHE | | | | | SYNCHR. | DATEN |
| 9 . . 16 | | | | ODER DATEN | | | | | SIGNALISIERUNG | |
| 17 . . 24 | | | | | | | | | | |
| 25 . . 32 | | | | | | | | | | |

Fig.3

zu 3,7,53

Ⓘ

**Fig.4**

| | |
|---|---|
| ▨▨▨▨▨ 39 | ——————— 49 |
| ════════ 47 | ═══════ 51 |

Fig. 5

Fig. 6

Fig. 7

Fig.8

Fig.9

Fig. 10